# EUROPÄISCHE PATENTSCHRIFT

(11) **EP 1 075 358 B1**
(45) Veröffentlichungstag und Bekanntmachung des Hinweises auf die Patenterteilung: **06.10.2004**
(21) Anmeldenummer: 99915444.6
(22) Anmeldetag: 04.05.1999
(51) Int. Cl.: B25F 1/00, G01G 19/54, B26B 11/00

(54) **MULTIFUNKTIONSTOOL**
MULTIFUNCTION TOOL
OUTIL MULTIFONCTIONS

(30) Priorität: 06.05.1998 CH 102598
(43) Veröffentlichungstag der Anmeldung: 14.02.2001
(73) Patentinhaber: Flytec AG, 6048 Horw (CH)
(72) Erfinder: CAMENZIND, Lorenz, CH-6004 Luzern (CH); JODER, Peter, CH-6010 Kriens (CH)
(74) Vertreter: Troesch Scheidegger Werner AG
(86) Internationale Anmeldenummer: PCT/CH1999/000184
(87) Internationale Veröffentlichungsnummer: WO 1999/056918

(56) Entgegenhaltungen:
- EP-A- 0 816 862
- CH-A- 587 471
- DE-A- 3 607 363
- US-A- 4 693 125
- US-A- 4 854 045
- US-A- 5 313 376
- US-A- 5 379 524
- US-A- 5 433 014
- US-A- 5 485 410
- US-A- 5 545 855
- 'Struktur und Eigenschaften von Messeinrichtungen', 1981, MEYERS ENZYKLOPCDISCHES VERLAG, BAND 16, SEITEN 115,116, MANNHEIM

## Beschreibung

Die vorliegende Erfindung betrifft ein multifunktionales Werkzeug, wie ein Taschenmesser, eine Zange, eine Klemme und dergleichen, geeignet insbesondere für Freizeitsport, Expeditionen, für Handwerker, für den Militärdienst und dergleichen.

Die Zeit, in welcher das Taschenmesser oder andere Handwerkzeuge lediglich als reine Werkzeuge verwendet wurden, ist längstens vorbei. Dem Taschenmesser beispielsweise werden immer weitere Funktionen hinzugefügt, wie beispielsweise werden heute Taschenmesser angeboten, welche als multifunktionale Werkzeuge bzw. Haushaltgeräte dienen können. So beinhalten Taschenmesser nebst den eigentlichen Messerklingen Scheren, Nagelfeilen, Zahnstocher, Sägen etc.

Daneben beinhalten Taschenmesser und andere Handwerkzeuge neuerdings integral auch Taschenlampen sowie werden sogar Taschenmesser angeboten, welche in einer der beiden Abdeckungen integral eine Uhr beinhalten.

Aus der DE-A-3607363 ist ein Schraubwerkzeug, wie insbesondere ein Drehmoment-Schraubenzieher bekannt, bei welchem in einem Griff verschiedene Werkzeugeinsätze montiert werden können. Dabei handelt es sich immer um Schraubwerkzeuge, d.h. um Werkzeuge mit ein und derselben Funktion. Wohl enthält dieses Werkzeug zusätzlich einen Messensor für das Erfassen des im Werkzeug erzeugten Drehmomentes, doch muss zur Auswertung und Anzeige der gemessenen Grösse ein elektrisches Signal an ein extern angeordnetes Wandler- und Anzeigegerät übertragen werden, wodurch die ganze Anordnung kaum als einfach handhabbares Handwerkzeug verwendet werden kann.

In der US-A-4 854 045 wird ein Sackmesser vorgeschlagen, welches modular mittels verschiedener Einheiten unterschiedlich ausgelegt werden kann. Module können hier steckbar, beispielsweise mittels einer schwalbenschwanzartigen Einkerbung, miteinander verbunden werden. Durch elektrische Verbindungskontakte können anstelle von reinen Messer enthaltenden Modulen auch elektronische Tools, wie beispielsweise ein Miniaturradio, angeordnet werden. Das vorgeschlagene Sackmesser kann keinesfalls als multifunktionales Werkzeug bzw. Haushaltgerät im Sinne der vorliegenden Erfindung verstanden werden.

Die Aufgabe der vorliegenden Erfindung liegt nun darin, die Funktionalität eines Taschenmessers oder generell eines Handwerkzeuges zu einem sogenannten multifunktionalen Werkzeug zu erweitern, insbesondere deshalb, da Handwerkzeuge in der Regel von sehr vielen Menschen in vielzähligen Lebenslagen auf sich getragen werden.

Diese Aufgabe wird durch ein multifunktionales Werkzeug mit den Merkmalen des Anspruchs 1 gelöst.

Vorgeschlagen wird, im oder am Werkzeug, wie einem Taschenmesser, mindestens eine der nachfolgenden, beispielsweise genannten Mess- und Anzeigeeinrichtungen anzuordnen:

Höhenmesser, Kompass, Barometer, Thermometer, Hygrometer, Windmesser, Geschwindigkeitsmesser, eine Waage und/oder Satelliten-Navigationseinrichtung.

Damit eine derartige Mess- und Anzeigeeinrichtung auch komplett funktionstüchtig ist, ist das Anordnen folgender Teile notwendig:

Mindestens ein Messsensor und/oder ein Eingabeorgan zum Messen und/oder Eingeben oder Ermitteln einer physikalischen Grösse,

mindestens ein Wandler zum Wandeln der gemessenen oder eingegebenen physikalischen Grösse in ein entsprechendes elektrisches Signal,

ein Mikroprozessor, welcher geeignet ist zum Herleiten einer normierten physikalischen Einheitsgrösse aus dem gewandelten elektrischen Signal, sowie

eine Anzeige der gemessenen oder eingegebenen physikalischen Grösse in der entsprechenden Einheit.

Bei der Anzeige handelt es sich vorzugsweise um eine sogenannte LCD-Anzeige (Liquid Crystal Display).

Aufgrund der Dimensionen eines Handwerkzeuges, wie eines Taschenmessers, ist es nicht sinnvoll, für alle die oben vorgeschlagenen Mess- und Anzeigeeinrichtungen je eine individuelle Anzeige vorzusehen, weshalb vorzugsweise die Anzeige in einem kombinierten gemeinsamen Display erfolgt. Um nun aber eine bestimmte Messgrösse im Display anzuzeigen, ist weiter das Anordnen einer Menu-Einrichtung notwendig, mittels welcher zwischen den verschiedenen physikalischen Messgrössen die gewünschte Anzeige ausgewählt werden kann.

Daneben ist es natürlich möglich, weiterhin die bereits bekannten Funktionseinheiten integral in einem Handwerkzeug, wie einem derartigen Taschenmesser vorzusehen, wie beispielsweise eine Taschenlampe oder eine Uhr. Im Falle des Anordnens einer Uhr ist es gar möglich bzw. bevorzugt, die Zeitanzeige in demselben Anzeigedisplay anzuordnen, welches ebenfalls geeignet ist für das Darstellen bzw. Anzeigen der jeweiligen physikalischen Grösse. Die Zeitanzeige ist somit ebenfalls mittels der erwähnten Menu-Einrichtung ansteuerbar bzw. darstellbar.

Die Stromversorgung der Mess- und Anzeigeeinrichtung kann entweder mittels einer Batterie erfolgen oder aber auch mittels einer Solarzelle. Speziell bei der Verwendung einer Batterie ist es vorteilhaft, wenn ein Ein- bzw. Ausschalteorgan vorgesehen ist, mittels welchem die Mess- und Anzeigeeinrichtung bei Bedarf eingeschaltet bzw. wieder ausgeschaltet werden kann. Dabei ist es auch weiter möglich, eine automatische Ausschaltung vorzusehen, welche nach einer vorbestimmten Zeitdauer nach Einschalten bzw. nach letztem Wechseln mittels der Menu-Einrichtung aktiviert wird.

Falls im erfindungsgemäss vorgeschlagenen Werkzeug, wie einem Handwerkzeug, eine Wägeeinrichtung angeordnet ist, kann es sich dabei beispielsweise um eine ausziehbare oder ausklappbare Federwaage handeln oder um eine auf Druck ansprechende Wägezelle, welche im Gehäuse angeordnet ist oder ausklappbar ist.

Die Erfindung wird nun anschliessend beispielsweise und unter Bezug auf die beigefügten Figuren zusätzlich erläutert.

Dabei zeigen:
- Fig. 1: in Perspektive ein erfindungsgemäss ausgerüstetes Taschenmesser,
- Fig. 2: eine weitere Ausführungsvariante eines erfindungsgemässen Taschenmessers,
- Fig. 3: eine spezielle Anordnung eines Temperaturfühlers an einer ausgeklappten Ahle eines erfindungsgemässen Taschenmessers,
- Fig. 4: schematisch dargestellt, verschiedene Strom- bzw. Datenverbindungs- und -übertragungselemente zwischen zwei Taschenmesser-Abdeckplatten,
- Fig. 5: schematisch, ausgeklappt, eine Wägeeinrichtung,
- Fig. 6: eine weitere Ausgestaltung einer Wägeeinrichtung,
- Fig. 7: wiederum eine weitere Anordnung einer Wägezelle in einem Taschenmesser,
- Fig. 8a und 8b: je eine weitere Ausführungsvariante eines erfindungsgemässen Taschenmessers, aufweisend eine wieder lösbar anzuordnende Abdeckung, mindestens teilweise enthaltend die Mess- und Anzeigeeinrichtung, und
- Fig. 9: in Perspektive, ein weiteres erfindungsgemäss ausgerüstetes multifunktionales Handwerkzeug, wo nur die Zangenfunktion ersichtlich ist.

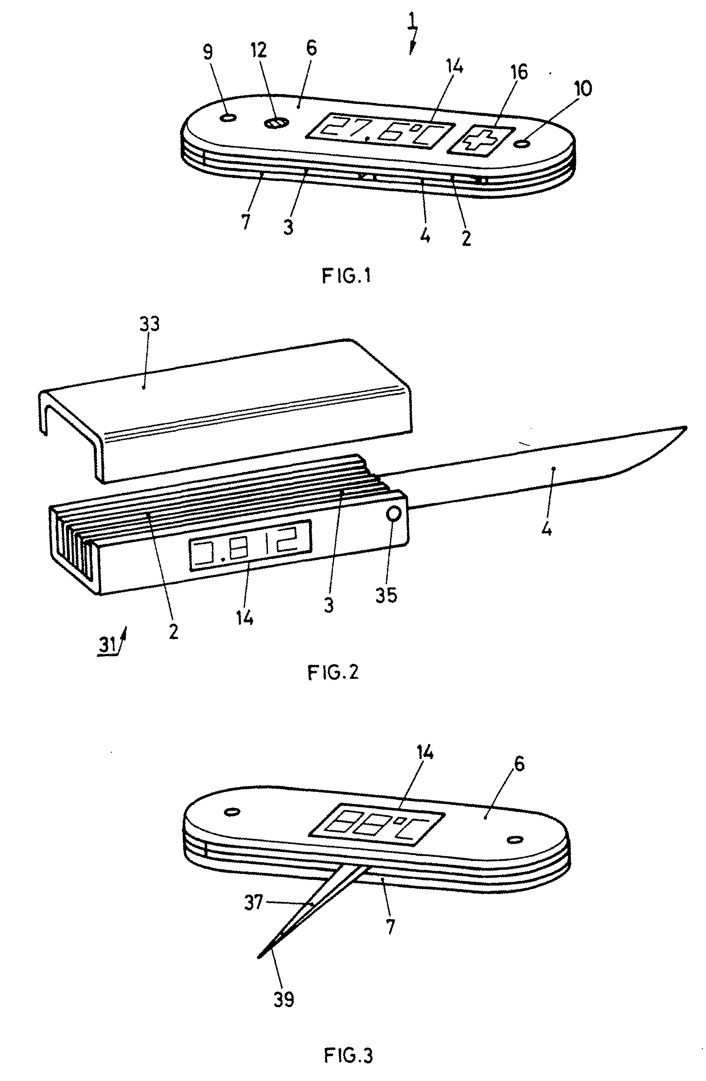

Figur 1 zeigt ein erfindungsgemässes multifunktionales Werkzeug in Form eines Taschenmessers 1, aufweisend verschiedene mechanische Funktionseinrichtungen, wie beispielsweise ein ausklappbares Messer 2, eine ausklappbare Schere 3, eine ausklappbare Feile 4 etc. Je beidseitig überdeckt wird das Taschenmesser durch Abdeckplatten 6 und 7, welche in der Regel aus einem Kunststoff gefertigt sind, selbstverständlich aber auch aus Holz oder Metall gefertigt sein können. Zusammengehalten wird das Taschenmesser durch je endständig angeordnete Stifte bzw. Haltebolzen 9 und 10.

In der oberen Abdeckung 6 nun ist beispielsweise im Gehäuse integral ein Temperaturfühler angeordnet, zum Messen der Umgebungstemperatur. Das gemessene Temperatursignal wird über einen nicht dargestellten, integral im Gehäuse 6 angeordneten Wandler und Mikroprozessor in die entsprechende physikalische Temperatureinheit gewandelt, und das so ermittelte Signal in Grad Celsius wird in der Anzeige 14 dargestellt. Vorzugsweise handelt es sich dabei um ein sogenanntes LCD-Display.

Erfindungsgemäß können auch mehrere Mess- und Anzeigeeinrichtungen beispielsweise im Gehäuse 6 angeordnet werden, wobei selbstverständlich ein Teil der Messsonden auch im Gehäuse 7 angeordnet werden kann. Da aber aus Platzgründen in der Regel lediglich eine Anzeige 14 vorgesehen ist, ist es somit notwendig, dass zwischen den verschiedenen Anzeigen gewechselt werden kann, was mittels einer Menü-Einrichtung bewerkstelligt werden kann. Zum Betätigen der Menü-Einrichtung ist im dargestellten Beispiel ein Drucksensor angeordnet, welcher beispielsweise unter dem dargestellten Schweizerkreuz 16 wiederum integral im Gehäuse 1 angeordnet ist. Durch Drücken des "Schweizerkreuzes" 16 kann somit von der dargestellten Temperaturmessung auf die Darstellung des gemessenen Luftdruckes gewechselt werden. Durch weiteres Drücken sind weitere Anzeigen möglich. Zudem ist es möglich, dass beispielsweise bei längerem Drücken die Anzeige automatisch ausschaltet und dann beispielsweise die Zeit dargestellt wird. Erst bei erneutem kurzen Drücken wird wieder eine physikalische Grösse in der Anzeige 14 dargestellt.

Figur 2 zeigt eine weitere Ausführungsvariante eines multifunktionalen Werkzeuges, wie eines Taschenmessers, in der Art, wie es beispielsweise vorwiegend im angelsächsischen Raum Verwendung findet. Im Taschenmesser 31 sind in einem U-förmigen Gehäuse verschiedene mechanische Werkzeuge angeordnet, welche um einen Haltestift bzw. einen Gelenkbolzen 35 ausklappbar sind, wie das in Fig. 2 dargestellte ausgeklappte Messer 4. Um diese ausgeklappte Messerklinge 4 in ausgeklappter Position fest anzuordnen, wird vorzugsweise auf das U-förmige Gehäuse ein entsprechender Deckel 33 aufgesteckt, welcher zum Einklappen des Messers wieder abnehmbar ist. Dieser Deckel kann entweder vollständig abnehmbar sein, oder aber auch schwenkbar um eine weitere Achse mit dem U-förmigen Gehäuse verbunden sein. Analog Fig. 1 ist auch in Fig. 2 nun seitlich im U-förmigen Gehäuse eine Anzeige 14 dargestellt, in welcher wiederum die gemessenen physikalischen Grössen dargestellt werden können. Selbstverständlich kann diese Anzeige auch im Bereich der U-Schenkelfläche des Gehäuses angeordnet sein oder gar im Deckel 33. Bei der Darstellung gemäss Fig. 2 geht es primär darum darzulegen, dass die vorliegende Erfindung nicht auf herkömmliche Taschenmesser beschränkt ist, wie sie beispielsweise in Westeuropa verwendet werden. Wie bereits eingangs erwähnt, ist die vorliegende Erfindung grundsätzlich geeignet für irgendwelche multifunktionellen Werkzeuge, worunter ebenfalls die verschiedensten Ausführungsvarianten von Taschenmessern gerechnet werden können.

Figur 3 zeigt eine spezielle Ausführungsvariante des Anordnens eines Temperaturfühlers 39 an der Spitze einer Ahle 37, wobei Fig. 3 die Ahle im ausgeklappten Zustand darstellt. Ein derartiger Temperaturfühler kann beispielsweise verwendet werden, um beim Grillieren die Temperatur im Innern von Fleisch zu messen, um festzustellen, wie weit der Brat- bzw. Garungsvorgang fortgeschritten ist.

Speziell in dem Falle, wo eine Vielzahl von verschiedenen Messsensoren und gegebenenfalls auch in beiden Abdeckungen Anzeigen vorgesehen sind, ist es notwendig, in beiden Abdeckungen 6 und 7 entsprechende Messsensoren, Schaltungen, Mikrochips und dergleichen anzuordnen. Damit ist es aber auch wichtig, dass zwischen den beiden Abdeckungen 6 und 7 sowohl ein Strom- wie auch ein Datenaustausch stattfinden kann, welcher beispielsweise über die beiden Haltestifte 9 erfolgen kann. Es ist aber auch möglich, zwischen den beiden Halteplatten 6 und 7 beispielsweise im Endbereich eine zusätzliche Überdeckung oder Verbindungsplatte 43 anzuordnen, für Datenübertragung sowie Stromversorgung. Gelegentlich sind Taschenmesser mit Haltebügeln 41 versehen, um beispielsweise ein Taschenmesser an einer Tragkette zu befestigen. Auch diese Haltebügel können wiederum für Datenübermittlung und Stromübertragung dienen.

Figur 5 zeigt vereinfacht ein ausgeklapptes Wägeelement 51, an welchem ein Gewicht angehängt werden kann.

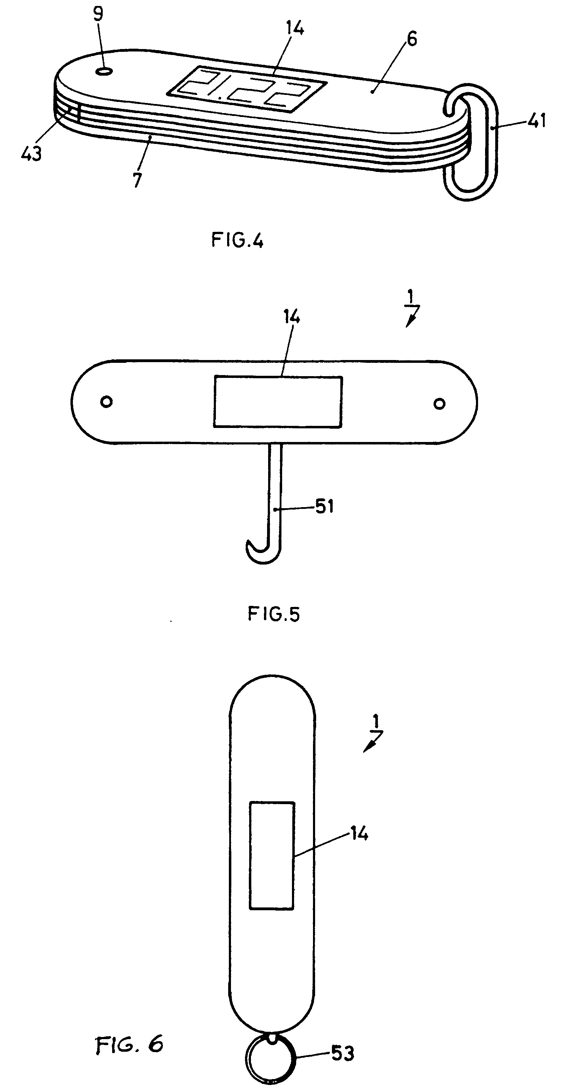

Figur 6 zeigt einen endständigen Haltering 53, welcher einerseits zum Befestigen des Taschenmessers 1 an einer Haltekette dienen kann oder aber wiederum zum Wägen von Gegenständen.

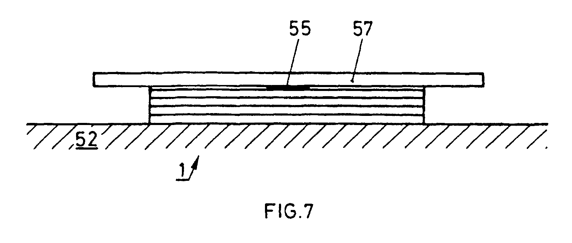

Figur 7 zeigt ein Taschenmesser 1, in welchem in einer der beiden Abdeckungen eine auf Druck ansprechende Wägezelle 55 angeordnet ist. Somit kann das Taschenmesser 1 auf eine Unterlage 52 angeordnet werden und ein zu wägendes Objekt 57 auf das Taschenmesser gelegt werden. Da in der gezeigten Darstellung in Fig. 7 keine Anzeige sichtbar ist, ist es sinnvoll, dass der gemessene Wert gespeichert wird, so dass bei Entfernen des Objektes 57 das gemessene Gewicht sichtbar wird.

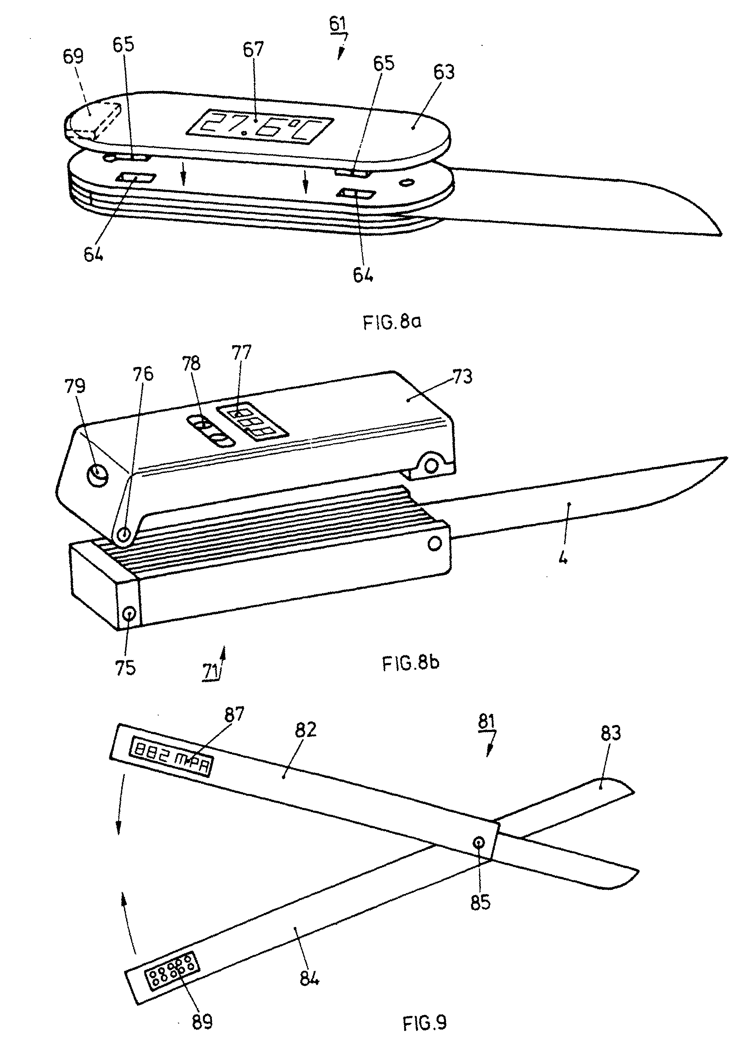

In den Fig. 8a und 8b ist, ähnlich dem Taschenmesser, dargestellt in Fig. 2, je ein weiteres erfindungsgemässes Taschenmesser dargestellt, je aufweisend eine wieder lösbar mit dem Taschenmesser verbindbare Abdeckung.

Fig. 8a zeigt in Perspektive ein Taschenmesser 61, auf welches aufsteckbar eine Abdeckung 63 mittels Ausnehmungen 64 im Taschenmesser und entsprechenden Steckstiften 65 in der Abdeckung aufgebracht werden kann. Die Steckverbindung kann derart sein, dass beim Aufstecken die Stifte 65 in den Ausnehmungen 64 einrasten, so dass eine feste Verbindung entsteht. Selbstverständlich können anstelle der Steckverbindungen auch schnappbare Verbindungen gewählt werden, eine Schraubverbindung oder gar eine Haftverbindung, mittels einem sogenannten Klettverschluss.

In der Abdeckung 63 ist wiederum ein Display 67 erkennbar sowie - nun zusätzlich - ein Anschluss bzw. eine Schnittstelle 69, um beispielsweise in der Anzeige- und Messeinrichtung gespeicherte Daten an ein anderes Gerät, wie beispielsweise einen Computer, zu übertragen. Auf diese Art und Weise ist es möglich, über einen längeren Zeitrahmen beispielsweise in der Abdeckung 63 in einem darin vorgesehenen Speichermedium Daten zu speichern und diese dann zu einem späteren Zeitpunkt durch Einstecken eines Kabels in die Buchse 69 zu übertragen. Durch das Anordnen der Anzeige- und Messeinrichtung in einer Abdeckung 63 wird diese Datenspeicherung und spätere Übermittlung an eine Auswerteinrichtung, wie beispielsweise einen PC, vereinfacht, indem diese Abdeckung 63 vom Werkzeug, wie dem Taschenmesser 61, entfernt werden kann. Auf diese Art und Weise wird es beispielsweise möglich, verschiedenen Personen, welche ein Taschenmesser der Art, dargestellt in der Fig. 8a besitzen, derartige Abdeckungen 63 auszuhändigen und diese Abdeckungen nach einer gewissen Zeit wieder einzusammeln. Dabei ist es selbstverständlich möglich, diese Abdeckungen 63 zu codieren bzw., dass diese Abdeckungen 63 beim Aufstecken auf das Messer 61 selbsttätig codiert werden. Nach dem Einsammeln können die diversen abgespeicherten Daten auf einen PC übertragen und dort ausgewertet werden. Als beispielsweise Anwendung sei auf das Messen von radioaktiver Strahlung verwiesen.

Derartige separate Abdeckungen sind auch geeignet, um Daten für eine Zutrittskontrolle zu speichern, d.h. für sogenannten "Access-Control". Eine derartige Abdeckung kann somit beispielsweise mit einem Skipass versehen werden, oder irgendeinem anderen Signal, um einen Zutritt zu irgendeiner Institution zu ermöglichen. Selbstverständlich kann dieses "Access-Control"-Organ auch integral im Werkzeug selbst angeordnet werden.

Ein weiteres Beispiel besteht im Anordnen eines sogenannten ELT's (= Emergency Localisation Transmitter), wodurch mittels eines ausgesandten Signals eine Person, zum Beispiel in Not befindend, lokalisiert werden kann.

Ähnlich ist in Fig. 8b wiederum analog dem Taschenmesser, dargestellt in Fig. 2, eine weitere ähnliche Ausführungsvariante dargestellt, indem hier auf ein Taschenmesser 71 eine Abdeckung 73 mittels Stiften 76 bzw. entsprechenden Ausnehmungen 75 aufgesteckt werden kann. Dabei ist es beispielsweise möglich, dass die Stifte 76 eindrückbar sind, so dass die Abdeckung 73 mit Leichtigkeit vom Taschenmesser 71 entfernt werden kann. Wiederum erkennbar ist ein Display 77 sowie nun, in Abänderung zur Ausführung in Fig. 8a, ein Infrarot-Sensor 79, um beispielsweise Daten mittels Infrarot oder anderen geeigneten drahtlosen Übermittlungstechniken an ein Datenspeicher- bzw. Datenauswertungsmedium, wie beispielsweise einen PC, zu übertragen. Schlussendlich erkennbar ist eine Menu-Schalteinrichtung 78, um zwischen verschiedenen Mess- und Anzeigemenus zu wechseln. Auf die Funktionsweise des in Fig. 8b dargestellten Taschenmessers inklusive Mess- und Anzeigeeinrichtung muss nicht weiter eingegangen werden, da sie analog derjenigen ist des Werkzeuges, dargestellt in Fig. 8a. Lediglich sei zu erwähnen, dass die in Fig. 8b vorgesehene Schnittstelle **79** für Datenlogger-Funktion eine kabellose Übertragung von Daten ermöglicht, wie beispielsweise induktiv, ohne sichtbare Kontakte, kapazitiv oder rein telemetrisch, d.h. über eine Funkfrequenz. Natürlich ist es auch möglich, am Abdeckgehäuse, wie übrigens auch integral am Taschenmesser selbst, eine aufsteckbare oder aufschraubbare Antenne anzuordnen, um Daten zu übertragen.

In Fig. 9 schliesslich ist ein weiteres multifunktionales Werkzeug 81 dargestellt, beispielsweise beinhaltend zwei ausklappbare Zangenschenkel 83, welche je in einem Werkzeugschenkel 82 bzw. 84 um die Achse 85 schwenkbar eingeklappt werden können. Die beiden Werkzeugschenkel 82 und 84 selbst können selbstverständlich ebenfalls um die Achse 85 zueinander geklappt werden, um ein kompaktes, gut verstaubares oder transportierbares Werkzeug zu bilden. Wiederum sind in den beiden Schenkeln 82 und 84 sowohl ein Anzeigedisplay 87 dargestellt sowie eine Anschlussbuchse 89, welche als Schnittstelle zum Übertragen von Daten dient. Alle in den vorangehenden Figuren 1 bis 8 dargestellten und beschriebenen Sachverhalte bzw. Anzeige- und Messeinrichtungen können selbstverständlich auch in einem Werkzeug, entsprechend demjenigen, dargestellt in Fig. 9, angeordnet bzw. integriert werden. Fig. 9 dient lediglich dazu, um darzustellen, dass die vorliegende Erfindung keinesfalls auf Taschenmesser beschränkt ist, sondern, dass das Anordnen der erfindungsgemäss beschriebenen Anzeige- und Messeinrichtung und der dazugehörenden Auswerteelemente in einem x-beliebigen Werkzeug, wie insbesondere einem Handwerkzeug, erfolgen kann.

Bei den in Fig. 1 bis 9 dargestellten multifunktionalen Werkzeugen bzw. Multifunktionstools in Form von Taschenmessern und einer Zange handelt es sich selbstverständlich nur um Beispiele, welche auf x-beliebige Art und Weise abgeändert, modifiziert oder durch weitere Elemente ergänzt werden können. So ist es selbstverständlich möglich, nebst den erwähnten Mess- und Anzeigeeinrichtungen je nach Bedarf weitere anzuordnen, wie beispielsweise ein ausklappbarer Windmesser.

Weiter werden sämtliche Werkzeuge und auch Messzellen in den Beispielen der Figuren 1 bis 9 gegebenenfalls als ausklappbar beschrieben bzw. dargestellt, selbstverständlich können diese Werkzeuge und Messeinrichtungen auch ausfahrbar oder ausschiebbar im Werkzeug angeordnet sein.

Das erfindungsgemäss vorgeschlagene Werkzeug bzw. Handwerkzeug, wie insbesondere Taschenmesser, eignet sich speziell für sportliche Betätigungen, wie beispielsweise Segeln, für alpine Sportarten, für Flugsportarten, Tauchen etc. Aber auch bei Expeditionen, im militärischen Bereich und auch für Handwerker bzw. bei bestimmten Berufsbetätigungen ist das erfindungsgemässe Werkzeug speziell geeignet.

## Patentansprüche

1. Multifunktionales Werkzeug (1, 61, 71, 81), **gekennzeichnet durch** mindestens eine im oder am Werkzeug (1) integral angeordnete Mess-, Eingabe- und Anzeigeeinrichtung (12, 14, 67, 77, 87) verschiedener physikalischer Messgrössen oder **durch** mehrere im oder am Werkzeug (1) integral angeordnete Mess-, Eingabeund Anzeigeeinrichtungen (12, 14, 67, 77, 87) je mindestens,einer physikalischen Messgrösse, sowie **durch** eine im oder am Werkzeug angeordnete Menüeinrichtung, mittels welcher zwischen den verschiedenen physikalischen Messgrössen die gewünschte Anzeige ausgewählt werden kann.

2. Werkzeug nach Anspruch 1, **gekennzeichnet durch** mindestens
- einen Messsensor zum Messen jeweils einer physikalischen Grösse und/oder ein Eingabeorgan zum Eingeben jeweils einer physikalischen Grösse,
- einen Wandler zum Wandeln der jeweiligen Mess- und/oder Eingabegrösse in ein elektrisches Signal,
- einen Mikroprozessor zum Wandeln des jeweiligen elektrischen Signals in eine normierte physikalische Einheit sowie
- eine Anzeige der jeweiligen gemessenen und/oder eingegebenen physikalischen Grösse in der entsprechenden Einheit.

3. Werkzeug nach einem der Ansprüche 1 oder 2, **dadurch gekennzeichnet, dass** mindestens ein Speichermedium vorgesehen ist für das Speichern der jeweiligen gemessenen bzw. ggf. gewandelten Messgrössen.

4. Werkzeug nach einem der Ansprüche 1 bis 3, **dadurch gekennzeichnet, dass** die Mess- und Anzeigeeinrichtung (12, 14, 67, 77, 87) ein Höhenmesser, Kompass, Barometer, Thermometer, Hygrometer, Geschwindigkeitsmesser, Windmesser, eine Waage, ein Messgerät für radioaktive Strahlung und/oder eine Satelliten-Navigationseinrichtung ist.

5. Werkzeug nach einem der Ansprüche 1 bis 4, **dadurch gekennzeichnet, dass** eine sogenannte Menuschaltung (16, 78) vorgesehen ist, um bei mehreren Messeinrichtungen jeweils die Messung und Anzeige einer bestimmten gewünschten physikalischen Grösse zu aktivieren.

6. Werkzeug nach einem der Ansprüche 1 bis 5, **dadurch gekennzeichnet, dass** die Anzeige (14, 67, 77, 87) eine sogenannte LCD(Liquid Crystal Display)-Anzeige ist.

7. Werkzeug nach einem der Ansprüche 1 bis 6, **dadurch gekennzeichnet, dass** weiter eine Uhr und/oder eine Taschenlampe integral in einem Werkzeug-Gehäuse angeordnet ist, wobei vorzugsweise die Zeitanzeige am bzw. im Anzeigedisplay der physikalischen Grösse angeordnet ist.

8. Werkzeug nach einem der Ansprüche 1 bis 7, **dadurch gekennzeichnet, dass** die Mess- und Anzeigeeinrichtung ein- bzw. ausschaltbar ist, wobei vorzugsweise die Ausschaltung nach einer bestimmten vorgegebenen Zeit automatisch erfolgt.

9. Werkzeug nach einem der Ansprüche 2 bis 7, **dadurch gekennzeichnet, dass** eine Wägeeinrichtung aus dem Taschenmesser ausziehbar oder ausklappbar angeordnet ist.

10. Werkzeug nach einem der Ansprüche 2 bis 8, **dadurch gekennzeichnet, dass** eine Aale (37) vorgesehen ist, an deren Spitze ein Temperaturfühler (39) angeordnet ist, beispielsweise, um beim Grillieren die Temperatur im Inneren von Fleisch zu messen, um festzustellen, wie weit der Brat- bzw. Garungsvorgang fortgeschritten ist.

11. Werkzeug nach einem der Ansprüche 1 bis 10, **dadurch gekennzeichnet, dass** ein Drucksensor (16) vorgesehen ist zum Betätigen der Menüeinrichtung.

12. Werkzeug nach einem der Ansprüche 1 bis 11, **dadurch gekennzeichnet, dass** die Stromversorgung der Mess- und Anzeigeeinrichtung mittels Batterie und/oder mittels einer Solarzelle erfolgt.

13. Werkzeug nach einem der Ansprüche 1 bis 12, **dadurch gekennzeichnet, dass** im oder am Werkzeug eine Schnittstelle (69, 79, 89) vorgesehen ist, um Daten an die Mess- und Anzeigeeinrichtung einzugeben bzw. um Daten von dieser zu übertragen.

14. Werkzeug nach Anspruch 13, **dadurch gekennzeichnet, dass** die Schnittstelle sowohl geeignet ist für den Datentransfer mittels Kabelübertragung wie auch für Datentransfer für den kabellosen Datentransfer, wie optisch, mittels Funk etc.

15. Werkzeug nach einem der Ansprüche 1 bis 14, **dadurch gekennzeichnet, dass** die Mess- und Anzeigeeinrichtung wieder lösbar am Werkzeug angeordnet ist, z.B. mittels einer Schnapp-, Schraub-, Steck-, Haft- oder Klemmverbindung.

16. Werkzeug nach einem der Ansprüche 2 bis 15, **dadurch gekennzeichnet, dass** Teile, wie z.B. die Anzeige, die Elektronik oder der Messsensor der Mess- und Anzeigeeinrichtung, integral mit dem Werkzeug verbunden sind und Teile wieder lösbar am Werkzeug angeordnet sind.

17. Werkzeug nach einem der Anprüche 1-16, **dadurch gekennzeichnet, dass** es sich um ein Taschenmesser handelt, aufweisend mindestens ein Gehäuse und eine integrale oder wieder lösbare Abdeckung, in oder an welchem Gehäuse eine Anzahl Werkzeuge angeordnet sind und in welcher Abdeckung und/oder in welchem Gehäuse mindestens eine Anzeigeeinrichtung (14, 67, 77) verschiedener physikalischer Grössen angeordnet ist.

18. Werkzeug nach einem der Ansprüche 1 bis 16, **dadurch gekennzeichnet, dass** mindestens zwei Gehäuseteile bzw. Abdeckungen (6, 7, 31, 33, 63, 73, 82, 84) vorgesehen sind, welche mittels geeigneter Mittel (9, 10, 35, 41, 43, 64, 65, 75, 76, 85) miteinander verbunden sind zur Stromübertragung bzw. für den Austausch von Daten.

19. Vorrichtung nach Anspruch 18, **dadurch gekennzeichnet, dass** die Übertragungsmittel Stifte (9, 10, 35, 64, 65, 75, 76, 85), plattenartige Elemente (43) oder ringartige Elemente (41) sind.

20. Werkzeug nach einem der Ansprüche 1 bis 19, **dadurch gekennzeichnet, dass** eine auf Druck ansprechende Wägezelle (55) integral im Werkzeug angeordnet ist.

21. Werkzeug nach einem der Ansprüche 1 bis 20, **dadurch gekennzeichnet, dass** es ein multifunktionales Handwerkzeug wie eine Zange, Klemme, ein Messer und dgl. ist.

22. Werkzeug nach einem der Ansprüche 1, bis 21, **dadurch gekennzeichnet, dass** ein Sendeorgan angeordnet ist zum Aussenden eines Lokalisierungssignals, um eine das Werkzeug tragende Person zu lokalisieren, wie ein sogenannter ELT (Emergency Localisation Transmitter).

23. Werkzeug nach einem der Ansprüche 1 bis 22, **dadurch gekennzeichnet, dass** im oder am Werkzeug ein Zutrittskontrollorgan vorgesehen ist, wie eine sogenannte Access-Control-Schaltung.

## Claims

1. Multifunctional tool (1,61,71,81), **characterised by** at least one measuring-, input- and display-device (12,14,67,77,87) for different physical values, integrated in or on the tool (1) or by a plurality of measuring-, input- and display-devices (12,14,67,77,87) each for at least one physical value, integrated in or on the tool (1) as well as by a menu selecting device arranged in or on the tool, permitting to choose from different physical values the display of the desired value.

2. Tool as claimed in claim 1, **characterised by** at least
- one measuring sensor for measuring at a time a physical value and/or in input device for entering at a time a physical value,
- one converter for converting the particular measuring and/or input value into an electrical signal,
- one microprocessor for converting the particular electrical signal into a standardised physical unit and
- one display of the particular measuring and/or entered physical value in the corresponding standardised unit.

3. Tool as claimed in any of claims 1 or 2, **characterised by** at least one storage means for storing said particular measuring or where applicable converted values.

4. Tool as claimed in any of claims 1 to 3, **characterised in that** said measuring and display device (12,14,67,77,87) comprises an altimeter , a compass, a barometer, a thermometer, a hygrometer, a speedometer, an anemometer, a balance, a measuring device for radioactive radiation and/or satellite navigation device.

5. Tool as claimed in any of claims 1 to 4, **characterised by** a so-called menu circuit (16,78) provided for activating, in case of a plurality of measuring devices, the measuring and display of a predetermined desired physical value.

6. Tool as claimed in any of claims 1 to 5, **characterised in that** the display device (14,67,77,87) is a so-called LCD (Liquid Crystal Display) -display.

7. Tool as claimed in any of claims 1 to 6, further **characterised by** a time-piece and/or flash light integrated in a tool casing, whereby the time display is preferably arranged on respectively in the display for the physical value.

8. Tool as claimed in any of claims 1 to 7, **characterised in that** the measuring and display device is selectable to on or off state, whereby the switching off is preferably done automatically after a predetermined lapse of time.

9. Tool as claimed in any of claims 2 to 7, **characterised by** a balance means arranged in the pocket knife in a manner to be extractable or tiltable out of the knife.

10. Tool as claimed in any of claims 2 to 8, **characterised in that** an awl (37) is provided, presenting at its tip a temperature sensor (39), e.g. useful during barbecue for measuring the temperature inside a piece of meat for determining the actual state of the roasting procedure.

11. Tool as claimed in any of claims 1 to 10, **characterised by** a pressure sensor (16) for actuating the menu selecting device.

12. Tool as claimed in any of claims 1 to 11, **characterised in that** the current supply of the measuring and display device takes place by battery and/or a solar cell.

13. Tool as claimed in any of claims 1 to 12, **characterised in that** an interface (69,79,89) is provided in or on the tool for entering data into the measuring and display device or for transferring data from said device.

14. Tool as claimed in claim 13, **characterised in that** said interface is suitable for the transfer of data by cable transmission as well as for the cableless transmission of data, such as optically, by radio etc.

15. Tool as claimed in any of claims 1 to 14, **characterised in that** the measuring and display device is detachably mounted on the tool, e.g. by means of a snap lock, a screw connection, an adhesive connection or a clamping connection.

16. Tool as claimed in any of claims 2 to 15, **characterised in that** parts, such as the display, the electronic circuit or the measuring sensor of the measuring and display device are integrally connected with the tool and other parts are detachably mounted on the tool.

17. Tool as claimed in any of claims 1 to 16, **characterised in that** the tool is a pocket knife, comprising at least a casing and an integrated or detachable cover, a number of tools being arranged in or on said casing and at least one display device (14,67,77) for different physical values being arranged in said cover and/or in said casing.

18. Tool as claimed in any of claims 1 to 16, **characterised in that** it comprises at least two casing parts and two covers (6,7,31,33,63,73,82,84) which for current transmission respectively for the exchange of data are interconnected by appropriate means (9,10,35,41,43,64,65,75,76,85).

19. Tool as claimed in claim 18, **characterised in that** the transmission means comprise pins (9,10,35,64,75,76,85), plate-like elements (43) or ring-like elements (41).

20. Tool as claimed in any of claims 1 to 19, **characterised by** a balance cell integrated in the tool which is activated by exerting a pressure on it.

21. Tool as claimed in any of claims 1 to 20, **characterised in that** the tool is a multifunctional hand tool, such as tongs, a clamp, a knife and similar.

22. Tool as claimed in any of claims 1 to 21, **characterised by** a radio transmitter for transmitting a localisation signal permitting to localise a person carrying the tool, such as a so-called ELT (Emergency Localisation Transmitter).

23. Tool as claimed in any of claims 1 to 22, **characterised by** an access control unit mounted in or on the tool, such as a so-called Access-Control-Circuit.

## Revendications

1. Outil multifonctionnel (1,61,71,81), **caractérisé par** au moins un dispositif de mesure, d'entrée et de visualisation (12,14,67,77,87) pour valeurs physiques diverses, intégré dans ou sur l'outil (1) ou par une pluralité de dispositif de mesure, d'entrée et de visualisation (12,14,67,77,87) intégrés dans ou sur l'outil (1), chacun pour au moins une valeur physique, ainsi que par un dispositif de sélection de menu disposé dans ou sur l'outil permettant de choisir la visualisation de l'indication désirée parmi les diverses valeurs physiques.

2. Outil selon la revendication 1, **caractérisé par** au moins
- un capteur pour mesurer une valeur physique désirée et/ou un dispositif d'entrée pour entrer une valeur physique désirée,
- un convertisseur pour convertir chaque valeur mesurée et/ou valeur à entrer en un signal électrique,
- un microprocesseur pour convertir le signal électrique respectif en une unité physique standardisée et
- un display dans l'unité correspondante de la valeur physique mesurée et/ou entrée respective.

3. Outil selon l'une des revendications 1 ou 2, **caractérisé par** ou moins un moyen mémoire pur mémoriser les valeurs respectives mesurées respectivement le cas échéant converties.

4. Outil selon l'une des revendications 1 à 3, **caractérisé en ce que** le dispositif de mesure et de visualisation (12,14,67,77,87) est un altimètre, une boussole, un baromètre, un thermomètre, un hygromètre, un compteur de vitesse, un anémomètre, un dispositif de pesée, un dispositif de mesure de la radiation radioactive et/ou un dispositif de navigation par satellite.

5. Outil selon l'une des revendications 1 à 4, **caractérisé par** un soi dit circuit de menu (16, 78) destiné lors de la présence d'une pluralité de dispositifs de mesure à activer la mesure et le display d'une valeur physique prédéterminée désirée.

6. Outil selon l'une des revendications 1 à 5, **caractérisé en ce que** le display est un LCD (Liquid Crystal Display) -display.

7. Outil selon l'une des revendications 1 à 6, caractérisé en plus par une horloge et/ou une lampe de poche intégrée dans un boîtier de l'outil, l'indication de l'heure étant de préférence située dans le display de la valeur physique.

8. Outil selon l'une des revendications 1 à 7, **caractérisé en ce que** le dispositif de mesure et de visualisation peut être enclenché ou déclenché, le déclenchement se faisant de préférence automatiquement après un lapse de temps prédéterminé.

9. Outil selon l'une des revendications 2 à 7, **caractérisé par** un dispositif de pesée qui peut être dégagé linéairement ou escamoté du couteau de poche.

10. Outil selon l'une des revendications 2 à 8, **caractérisé par** une alène (37) présentant à sa pointe une sonde de température (39), par exemple pour mesurer lors d'une grillade la température à l'intérieur d'une viande pour constater l'état de la cuisson.

11. Outil selon l'une des revendications 1 à 10, **caractérisé par** un capteur de pression (16) pour activer le circuit de menu.

12. Outil selon l'une des revendications 1 à 11, **caractérisé en ce que** l'alimentation en courant du dispositif de mesure et de visualisation se fait au moyen d'une batterie ou d'une cellule solaire.

13. Outil selon l'une des revendications 1 à 12, **caractérisé par** une interface (69,79,89) dans ou sur l'outil pour permettre d'entrer des dates au dispositif de mesure et de visualisation ou de transmettre des dates à partir de ce dispositif.

14. Outil selon la revendication 13, **caractérisé en ce que** l'interface peut être utilisée pour transmettre des dates par transfert par câble et pour transmettre des dates par transfert sans câble, par exemple par voie optique, radio etc.

15. Outil selon l'une des revendications 1 à 14, **caractérisé en ce que** le dispositif de mesure et de visualisation est monté de manière démontable à l'outil, par exemple au moyen d'un assemblage à enclenchement, à vis, à enfichage, par collage ou par serrage.

16. Outil selon l'une des revendications 2 à 15, **caractérisé en ce que** des éléments, comme par exemple le display, l'électronique ou le capteur de mesure du dispositif de mesure et de visualisation sont connectés intégralement avec l'outil tandis que d'autres éléments sont fixés à l'outil de manière détachable.

17. Outil selon l'une des revendications 1 to 16, **caractérisé en ce que** l'outil est un couteau de poche, comprenant au moins un boîtier et un couvercle intégré ou détachable, un nombre d'outils étant disposés dans ou sur ledit boîtier et dans quel couvercle et/ou dans quel boîtier est prévu au moins un dispositif de visualisation (14,67,77) de valeurs physiques distinctes.

18. Outil selon l'une des revendications 1 à 16, **caractérisé en ce qu'**il comprend au moins deux éléments de boîtier respectivement couvercles (6,7,31,33,63,73,82,84) qui pour la transmission de courant respectivement pour l'échange de dates sont interconnectés par des moyens appropriés (9,10,35,64,65,75,76,85).

19. Outil selon la revendication 18, **caractérisé en ce que** les moyens de transmission sont constitués par des goujons (9,10,35,64,65,75,76,85), des éléments en forme de plaque (43) ou par des éléments en forme d'anneau (41).

20. Outil selon l'une des revendications 1 à 19, **caractérisé par** l'intégration dans l'outil d'une cellule-balance qui peut être activée en réponse à une force de pression.

21. Outil selon l'une des revendications 1 à 20, **caractérisé en ce qu'**il est un outil à main multifonctionnelle, comme une pince, un serre-joints, un couteau et semblable.

22. Outil selon l'une des revendications 1 à 21, **caractérisé par** un organe émetteur pur émettre un signal de localisation pour localiser une personne portant l'outil, comme par exemple un ELT (Emergency Localisation Transmitter).

23. Outil selon l'une des revendications 1 à 22, **caractérisé par** un organe de contrôle d'accès dans ou sur l'outil, comme par exemple un circuit de contrôle d'accès.
